# EUROPEAN PATENT APPLICATION

(11) **EP 4 411 669 A1**
(43) Date of publication of application: **07.08.2024**
(21) Application number: 23154087.3
(22) Date of filing: 31.01.2023
(51) Int. Cl.: G06V 10/44, G06V 10/771, G06V 10/77, G06V 10/774, G06V 10/82, G06V 20/69

(54) **A COMPUTERIZED TRAINING METHOD OF A CLASSIFICATION MODEL**

(71) Applicant: Ummon HealthTech, 71000 Macon (FR)
(72) Inventor: Vinçon, Nathan, 91440 Bures sur Yvette (FR); Morel, Louis-Oscar, 21000 Dijon (FR)
(74) Representative: Fidal Innovation

(57) **Abstract**

A computerized training method of a classification model,
the classification model being adapted to determine a classification output according to one or more of a set of classes, when being implemented on an input image representing an input measurement of an input biological characteristic of an organ or an input biological sample of a tissue of an organ,
the one or more set of classes being relative to a physiological state or a biological or a clinical relevant characteristic of tissues of an organ.

## Description

### FIELD OF THE INVENTION

The present invention relates to computer vision applied to medical applications.

More specifically, the invention relates to a training method of classification model to be implemented on medical images, a method for classifying medical images and a system for classifying medical images.

### BACKGROUND OF THE INVENTION

In the medical field, a classification model can be trained with medical images to help answering a medical question and then implemented on input medical images to help answering this question. The model is trained according to a specific label which can be divided into different classes. This specific label is relative to a biological or clinical characteristic of the input image and the model is trained to classify the input image according to this label into one of the different classes. Basically, the model is trained to output a probability that the input image corresponds to the label or not: in this case, there is two classes "0" or "1" and the output is binary output. According to this output, the medical question can be answered by a specialist since it gives him insights about the biological or clinical characteristic. Thus, the reliability of the model's response, i.e. its output, is important to the specialist.

Among medical images, histopathological images are tissue sections stained and analysed with a microscope by a pathologist to highlight features from the tissue related with diseases. These images are the gold standard for cancer diagnosis and still have a huge potential to improve clinical practices. Thus, classification models are trained with these images to help specialists answering a medical question.

However, in computer vision, data shift (i.e. a shift in the data distribution) has proven to be a major barrier for safe and robust deep learning real-world applications, such as computer vision for autonomous vehicles, pose estimation, and, also in medical image segmentation and classification.

From general perspective a data shift occurs when the training process of the model leads to the selection and the consideration of characteristics or features from the image that are not relevant for the classification of the image according to the one or more of a set of classes defined during the designing of model architecture. This selection and consideration to classify is caused by the dependency of the training images to the condition of their acquisition. Thus, as the model - and its designer - cannot "know" which features is caused by the acquisition and which is relevant to the classification, data shifts occur: an image not acquired in the same condition could lead to an incorrect classification of the image.

For example, some data shifts for medical images, for example histopathological images, are known such as differences in the acquisition device parameters, differences in the staining and the multitude of parameters in the different steps of the histopathology slide preparation.

However, risk may also come from a type of data shift that is not yet known. Indeed, as explained above, any selection of a feature actually not relevant for the classification according to the one or more of a set of classes defined, i.e. not relevant to the one or more classes, and then used to classify the training image can lead to data shifts during the implementation of the model.

Domain Adversarial (DA) training has proven to be effective against data shifts notably in histopathological images.

However, classic DA training configuration requires a sample from the targeted source of data (e.g. data from a new laboratory). This is generally not a problem as it only requires to pick samples from the new environment and train with the DA without requiring to label these new data. However, in clinical application, it is generally not possible to fine-tune a posteriori, as it would require clinically validating the model again. But clinical applications need a proven robustness to satisfy regulatory requirements.

Thus, a first drawbacks of the known DA training methods is that an efficient DA training requires a targeted source of data during the DA training process whereas it should be better to solve data shift issues with a DA training without knowing the targeted source of data to be able to use the trained model with a the more possible sources of data.

The invention thus aims to solve the above-mentioned drawbacks and from a more general point of view to provide a classification model resistant to data shifts.

### BRIEF SUMMARY OF THE INVENTION

Thus, the invention relates to a computerized training method of a classification model,
the classification model being adapted to determine a classification output according to one or more of a set of classes, when being implemented on an input image representing an input measurement of an input biological characteristic of an organ or an input biological sample of a tissue of an organ,
the one or more set of classes being relative to a physiological state or a biological or a clinical relevant characteristic of tissues of an organ;
the classification output being relative to the physiological state or the biological or the clinical relevant characteristic of the organ,
this classification output relative to this organ defining the semantic of the classification model,
an implementation image space of the classification model, defining images adapted to be used as input of the classification model,
this input measurement or this input sample being acquired by a measurement system according to a measurement method and/or biologically treated by a biological treatment system according to a biological treatment method,
the input image, on which the classification is trained to be implemented on, being acquired by an image acquisition system according to an image acquisition method and/or digitally processed by digital image processing system according to a digital image processing method,
an image domain source for any given image representing an input measurement of an input biological characteristic of an organ or an input biological sample of a tissue of an organ, and acquired by an image acquisition system according to image acquisition method and/or digitally processed by digital image processing system according to a digital image processing method being defined by its acquisition system, its acquisition method, its biological treatment system, and/or its biological treatment method of the measurement or the sample, and/or its image acquisition system, its image acquisition method, its digital image processing system, and/or its digital image processing method of the any given image;
the classification model comprising:
   - a feature extractor adapted to, when implemented on a given image, select a reduced set of features from this given image;
   - a outcome classifier adapted to, when implemented on a given reduced set of features selected from a given image, categorize the given reduced set of features into one or more of a set of classes defining the classification output of the outcome classifier and the classification model; the one or more set of classes being relative to the physiological state or the biological or the clinical relevant characteristic of the organ,
   - a domain source classifier adapted to, when implemented on a given reduced set of features selected from an image representing a measurement of a biological characteristic of a patient or a biological sample of a patient, categorize the given reduced set of features into one or more of a set of classes defining the output of the domain source classifier, the one or more set of classes being relative to an image domain source of this given image;
      - a outcome classifier training image space defining images
representing an input measurement of an input biological characteristic of an organ or an input biological sample of a tissue of an organ and being adapted to be used to train the outcome classifier,
   - a domain classifier training image space , defining images representing an input measurement of an input biological characteristic of an organ or an input biological sample of this organ, and being adapted to be used to train the domain classifier, the domain classifier training image space being bounded by a domain limit defined by the acquisition system, the acquisition method, the biological treatment system, and/or the biological treatment method of the measurement or the sample, and/orthe image acquisition system, the image acquisition method, the digital image processing system, and/or the digital image processing method of the image;
the training method comprising:
   a outcome classifier training process comprising:
      given a organ training collection comprising a plurality of organ training images representing an input measurement of an input biological characteristic of an organ or
      an input biological sample of this organ and comprised in the outcome classifier training image space,
      i - a feature computerized module implements the feature extractor on an image of the organ training collection to select a reduced set of features from this image,
      ii - a classification computerized module implements the outcome classifier on the reduced set of features obtained from this image to determine a organ output relative to the physiological state or the biological or the clinical relevant characteristic
      iii - an optimization computerized module optimizes the feature extractor and the outcome classifier and by repeating steps i and ii for each image of the organ training collection and updating a set of parameters of the feature extractor and a set of parameters of the outcome classifier at each iteration according to the accuracy of the output of the outcome classifier in order to increase the accuracy of the outcome classifier;
   a domain classifier training process comprising:
      given a domain training collection comprising a plurality of domain training images representing an input measurement of an input biological characteristic of an organ or
      an input biological sample of this organ and comprised in the domain classifier training image space,
      at least two image domain sources of a group of images of the domain training collection being different from an image domain source of a group of images of the organ training collection,
         iv - the feature computerized module implements the feature extractor on an image of a plurality of domain source training images of a biological tissue to select a reduced set of features from this image,
         v - a classification computerized module implements the domain source classifier on the reduced set of features selected from the image of the plurality of domain source training images to determine a domain source output relative to image domain source of this image;
         vi - an optimization computerized module optimizes the domain source classifier by repeating steps iv and v for each image of the domain training collection and updating the same set of parameters of the feature extractor and a set of parameters of the domain source classifier at each iteration according to an output of the domain source classifier in order to prevent the domain source to be determined by the domain classifier;
wherein the updating of the set of parameters of the feature extractor and the updating of the set of parameters of the domain source classifier, during the domain classifier training, is adversarial.

The classification model is designed to be implemented on a medical image, which is therefore the input image of the classification model. It means that the input data of the classification model is a medical image.

Moreover, this medical image represents a measurement of an input biological characteristic of an organ or a biological sample of a tissue of an organ. This measurement is therefore the input measurement, and the corresponding biological characteristic is the input characteristic. Otherwise, the medical image can represent a biological sample of a tissue of an organ, and, in this case, this sample is the input biological sample.

Thus, the classification model has for input an input image representing an input measurement of an input biological characteristic of an organ or an input biological sample of a tissue of an organ.

The organ can be any organ of the human or animal body. The term "organ" refers to a group of tissues collaborating on the same physiological function. Some organs perform several functions simultaneously or alternately, but in this case, each function is usually performed by a subset of cells and the term "organ" therefore refers to this subset of cells.

This organ (or this subset of cells as explained above) and the classification output (defined by the one or more set of classes relative to the physiological state or the biological or the clinical relevant characteristic of the organ) define an image semantic of the classification model.

In other words, the image semantic corresponds to both the definition of the organ (or the subset of cells as explained above) for which the outcome classifier is intended to be implemented and to the one or more set of classes relative to the physiological state or the biological or the clinical relevant characteristic of the organ into which the outcome classifier classify the image of the organ.. Indeed, a pancreas tissue image and a breast tissue image have not the same semantic since it is not possible to determine a physiological state or a biological or a clinical relevant characteristic of one by classifying an image of the other. Then, a outcome classifier relative to a physiological state or a biological or a clinical relevant characteristic of a breast cannot be trained with images of pancreas.

Indeed, it would be equivalent to doing a covid PCR test to predict HIV which, of course, is a non-sense.

In addition, an implementation image space refers to all the medical images adapted to be used as input of the classification model once it has been trained. It means that this image space refers to all the input images possible for the classification model once trained.

Thus, the implementation image space comprises any image representing an input measurement of an input biological characteristic of an organ or an input biological sample of a tissue of an organ which can be classified according to the relevant biological or clinical characteristic or the relevant physiological state.

The outcome classifier training image space defines images representing an input measurement of an input biological characteristic of an organ or an input biological sample of a tissue of an organ and adapted to be used to train the outcome classifier.

In other words, those images are adapted to be used to train the outcome classifier, i.e. to be classified into the one or more set of classes being relative to a physiological state or a biological or a clinical relevant characteristic of tissues of an organ.

The one or more set of classes are relative to a physiological state or a biological or a clinical relevant characteristic of tissues of an organ. The output of the classification is therefore also relative to the relevant biological or clinical characteristic of the patient or the relevant physiological state.

This biological or clinical characteristic or this physiological state is also called the relevant biological or clinical characteristic of the patient or relevant physiological state, or simply the relevant characteristic or relevant state.

Thus, the classification model has for function to classify the input measurement of the input biological characteristic of the organ or the input biological sample of a tissue of the organ into the one or more set of classes.

In other words, the classification model establishes a link between the input measurement of the input biological characteristic of the organ or the input biological sample of a tissue of the organ on the input image and the relevant biological or clinical characteristic of the patient or the relevant physiological state.

Moreover, the input image of the classification model is a technical data as it is acquired by an image acquisition system according to an image acquisition method and/or digitally processed by digital image processing system according to a digital image processing method. The acquisition system and method and/or the digital processing system and method define the digital acquisition pipeline of the input image.

Moreover, this input image represents technical data as this input measurement or this input sample is acquired by an acquisition system according to an acquisition method and/or biologically treated by a biological treatment system according to a biological treatment method. Those measurement system and method and/or biological treatment system and method define the measurement pipeline of the input measurement or the input sample.

An image domain source of the input image defines the digital prints of the input image which reveals or betrays the digital acquisition pipeline of the input image but also the digital prints which reveals or betrays the measurement pipeline of the input measurement or the input sample. Thus, the image domain source of the input image is defined by its digital acquisition pipeline and the measurement pipeline.

The domain classifier training image space refers to medical images relative to any organ which have been acquired by a measurement pipeline and a digital acquisition pipeline. The measurement pipeline and the digital acquisition pipeline are similar to the ones of the input image of the classification model since those medical images refer to organs (but not necessarily the same organ than the one defining an image semantic of the input image of the classification model)

According to the invention, at least one image domain source of a group of images of the domain training collection being different from an image domain source of a group of images of the organ training collection.

Thanks to these provisions, the feature extractor is trained with a wider variety of digital acquisition pipelines and the measurement pipelines.

For example, it means that different devices to acquire the sample of tissues of the organ or to realise a fixation process on those tissues are represented in the domain training collection.

In addition, according to the invention, the updating of the same set of parameters of the feature extractor and a set of parameters of the domain source classifier at each iteration according to an output of the domain source classifier is made to prevent the domain source to be determined by the domain classifier.

Thus, the set of parameters of the features extractor is updated with a wider variety of digital acquisition pipelines and the measurement pipelines to not be able to determine them.

This means that the reduced set of features selected by the features extractor from the images of the domain training collection does not allow the domain classifier to determine the digital acquisition pipeline and the measurement pipeline of this image.

However, according to the invention, the same version of the feature extractor - i.e. with the same set of parameters - is implemented to select a reduced set of features from both the images of the organ training collection and the domain training collection.

As, according to the invention, the input measurement or the input sample is acquired by a measurement system according to a measurement method and/or biologically treated by a biological treatment system according to a biological treatment method and that the domain classifier training image space is defined, precisely, by this acquisition system, this acquisition method, this biological treatment system, and/or this biological treatment method of the measurement or the sample, and/or this image acquisition system, this image acquisition method, this digital image processing system, and/or this digital image processing method, the adversarial training of the feature extractor and the domain classifier leads to an extraction of a reduced set of features independent from the digital acquisition pipeline and the measurement pipeline and adapted to accurately classify the image into the one or more set of classes relative to a physiological state or a biological or a clinical relevant characteristic of tissues of an organ.

Since the reduced set of features is independent from the digital acquisition pipeline and the measurement pipeline, the classification model trained according to this training method can be implemented on input image with an image domain source different from the one(s) of the images of the organ training collection and still be accurate enough.

In other words, this selection allowed by the training method provides a classification model resistant to data shifts and solves the technical problem.

According to different aspects, it is possible to provide the one and / or the other of the characteristics below taken alone or in combination.

According to one embodiment, the number of image domain sources of the images of the organ training collection and/or the domain training collection is superior to two.

In this case, the domain source classifier comprises a determined number of specific domain source classifier, the determined number of specific domain source classifier corresponding to the determined number of image domain sources of the images of the organ training collection and/or the domain training collection, wherein each specific domain classifier is adapted to, when implemented on a given reduced set of features selected from an image representing an input measurement of an input biological characteristic of an organ or an input biological sample of this organ, categorize the given reduced set of features into one of two set of classes defining the output of this domain source classifier, the two set of classes being relative to two specific image domain sources of the plurality of image domain sources of the images of the organ training collection and/or the domain training collection,

wherein the a) domain classifier training process comprises:
v - a domain source computerized module implements a specific domain source classifier on the reduced set of features selected from the image of the plurality of domain source training images tissue to determine a domain source output relative to one of the two specific image domain sources of this specific domain classifier:
vi - the optimization computerized module optimizes the domain source classifier by repeating steps iv and v for each image of the domain training collection and updating the same set of parameters of the feature extractor and a set of parameters of a specific domain source classifier at each iteration according to the output of this specific domain source classifier in order to prevent the domain source to be determined by this specific domain classifier.

This number of image domain sources can be any number and the greater it is the more efficient is the DA training allowed by the training method.

Thus, according to this embodiment, there is no reference image space as in the known DA training (realized by the adversarial updating of the parameters of the features extractor) with one source image space, with its own domain source, and one target image space, with its own domain source, where the target image space is the reference for the adversarial updating.

As there is no reference, the adversarial optimization of the domain source classifier and the outcome classifier leads to a feature extractor selecting a reduced set of features even more independent from the image domain source of the image. This independence of the selected features by the features extractor with the image domain source of the image can be seen as an independence of the features with its whole acquisition process and the conditions of acquisition, i.e. the digital acquisition pipeline and the measurement pipeline. It can also be said that the selected features are homogenous or have been homogenised.

Such homogenous features or independent features with the image source allows the outcome classifier to be accurate and reliable on a wider space of the implementation image space of the classification model.

In other words, the implementation image space of the classification model is extended and made independent from the organ training image space represented by the organ training collection.

Moreover, the use of images of the domain training collection with more than two image domain sources leads to a feature extractor selecting a reduced set of features independent from the image domain source of the input image. This allows using images from different image domain source for the organ training collection.

For instance, more than two clinicals trials producing images, representing a measurement of a biological characteristic of a patient or a biological sample of a patient of the same nature as the input biological characteristic or the input biological sample of the classification model to be trained, with the organ relative to the relevant biological or clinical characteristic of the classification model to be trained.

Thus, as the organ training collection comprises more images - i.e. images of the organ training image space - a better coverage of the implementation image space is realized with the label training image space which leads to a outcome classifier more accurate since the organ training image (the organ training collection) comprises more different labelled images : in others words, the labelled images from the different image source domains describe more diverse measurements of the input biological characteristic of a patient or more diverse input biological samples.

Implementing an adversarial training with more than two image domain sources for the images of the label training collection and/or the domain training is not trivial compared to only two domain sources.

Indeed, the adversarial training would be even more unstable with more than two image domain sources than it is with two.

That is why, according to this embodiment, the domain source classifier comprises a determined number of specific domain source classifier, the determined number of specific domain source classifier corresponding to the determined number of image domain sources of the images of the label training collection and/or the domain training collection.

Thus, the domain classifier is divided into the determined number of specific domain classifier which classify according to two set of classes being relative to two specific image domain sources of the plurality of image domain sources of the images of the label training collection and/or the domain training collection.

This allows a stable adversarial training of the domain classifier and the outcome classifier with more than two image domains sources.

By extension, the classification model trained with the method according to this embodiment is even accurate on a wider implementation image space since the reduced set of features is independent with an even greater number of image domain source, i.e. an even greater number of digital acquisition pipelines and measurement pipelines.

According to one embodiment, for each batch comprising images relative to two different domain sources from the domain training collection, the outcome classifier training and the specific domain classifier trainings are alternated.

According to one embodiment, the set of parameters of the feature extractor and the set of parameters of the outcome classifier are updated after the set of parameters of all the specific domain classifiers have been updated according to the output of each specific domain classifier.

On the contrary, according to an alternative embodiment, the set of parameters of the feature extractor and the set of parameters of the outcome classifier are updated each time after the set of parameters of one of the specific domain classifiers have been updated according to the output of the one specific domain classifier.

The alternative embodiment allows a more stable training of the feature extractor and the outcome classifier.

According to one embodiment, at least one group of images of the domain training collection is outside of the outcome classifier training image space., i.e. at least one group of images of the domain training collection is related to an image semantic different from the image semantic defined by the organ.

In others word, at least one group of images of the domain training collection is not adapted to train the outcome classifier. Thus, the organ training image space and the domain training image space are distinct image spaces.

In others word, an image semantic of at least one group of images of the domain training collection is different from the image semantic of the outcome classifier training space defined by the organ, i.e. different from the image semantic of the images of the training organ collection.

In others word, at least one group of images of the domain training collection is not of the same nature as the images of the organ training collection, i.e. a measurement of an biological characteristic or a biological sample represented on the at least one group of images of the domain training collection is relative to an organ different from the organ defining the image semantic of the input image of the classification model.

For example, as the outcome classifier relative to a lung cancer classification task (i.e. with a label and one or more set of classes relative to a biological or clinical characteristic of a lung relevant for lung cancer) is trained, a collection of prostate cancer images for DA training, i.e. for the training of the domain classifier, is used.

As a reminder, according to the invention, at least one image domain source of a group of images of the domain training collection being different from an image domain source of a group of images of the organ training collection, the domain training collection comprises images from different image domain sources, so different digital acquisition pipeline and the measurement pipelines are represented in the domain training collection.

Here, according to this embodiment, the domain training image space comprises more images, i.e. the domain training collection comprises more images. Indeed, it can be hard to collect image of the same organ acquired with the same digital acquisition pipeline and the measurement pipeline. Here, according to this embodiment, image of different organ acquired with the same digital acquisition pipeline and the measurement pipeline can be used for the training of the domain classifier.

Thus, even more images from different digital acquisition pipeline and the measurement pipelines can be used to train the domain classifier and, the use of different semantic make easier the construction of the domain training collection.

As the domain training collection comprises more images, the training of the domain classifier (updating the same set of parameters of the feature extractor and a set of parameters of the domain source classifier) is more accurate and this leads to a selection - by the feature extractor - of a reduced set of features independent from the image domain source of the input image.

Thus, these provisions allow the selection of feature more homogenous by the feature extractor as described above.

*In fine,* such homogenous features or independent features with the image source allows the outcome classifier to be accurate on a broader space of the implementation image space of the classification model.

This at least one group of images can be from any image domain source, and it can be from an image domain source different from the images (or at least one group of images) of the organ training collection.

According to one embodiment, groups of images of the domain training collection are related to a plurality of different and distinct image semantics.

Thanks to these provisions, even more images from different digital acquisition pipeline and the measurement pipelines can be used to train the domain classifier and, the use of different semantic make easier the construction of the domain training collection.

According to one embodiment, the one or more set of classes of the classification model and the classification output is relative to:
- a gene
- a variant in a sequence of nucleotides of a gene,
- a group of variants,
- a gene ontology,
- a gene pathways related to the gene,
- a predictive and/or diagnostic morphological signature of a drug or a disease, and/or.
- a clininal outcome.According to one embodiment, the input image is relative to an input measurement of an input biological characteristic of an organ, and the images of the organ training collection and/or the domain training collection comprises measured data chart.

According to one embodiment, the input image is relative to an input sample of a tissue of an organ, the images of the organ training collection are cytological images and/or histopathological images of the tissue, and/or the images of the domain training collection the domain training collection are cytological images and/or histopathological images of tissues.

According to one embodiment, the input image is relative to an input sample of a tissue of an organ, and the acquisition method and/or the biological treatment method of the input sample comprises:
- an acquisition or sampling process;
- a fixation process to preserve the structure and the hardening of the tissue;
- a inclusion process to obtain a block inside which the sample is included;
- a cut process to obtain slides of the block; and/or
- a coloration process.

According to one embodiment, the image acquisition method and/or the digital image processing method of the input image comprises one of the following:
- mage acquisition,
- storage,
- editing, and/or
- display of images.

The image acquisition method and/or the digital image processing method of the input image depends on the parameters of four main components: light source, slide stage, objective lenses, and a high-resolution camera for image capture.

In those case, the training method is even more useful as such classes can extremely suffer from data shift due to selected sets of features not independent from the digital acquisition pipeline and the measurement pipeline of the input image.

According to another aspect, the invention relates to a computerized method for classifying an image by implementing a classification model trained with the training method according to the invention,
the classification model being adapted to determine a classification output according to one or more of a set of classes, when being implemented on an input image representing an input measurement of an input biological characteristic of an organ or an input biological sample of a tissue of an organ,
the one or more set of classes being relative to a physiological state or a biological or a clinical relevant characteristic of tissues of an organ;
the classification output being relative to the physiological state or the biological or the clinical relevant characteristic
the classification model comprising:
   - a feature extractor adapted to, when implemented on a given image, select a reduced set of features from this given image;
   - a outcome classifier adapted to, when implemented on a given reduced set of features selected from a given image, categorize the given reduced set of features into one or more of a set of classes defining the classification output of the outcome classifier and the classification model;
the one or more set of classes being relative to the physiological state or the biological or the clinical relevant characteristic
   - a domain source classifier adapted to, when implemented on a given reduced set of features selected from an image representing a measurement of a biological characteristic of a patient or a biological sample of a patient, categorize the given reduced set of features into one or more of a set of classes defining the output of the domain source classifier,
the one or more set of classes being relative to an image domain source of this given image;
the implementation of the classification model comprising the following steps:
   i - a feature computerized module implements the feature extractor on the input image to select a reduced set of features from the input image,
   ii - a classification computerized module implements the label classifier on the reduced set of features obtained from the input image to determine a label output relative to the relevant biological or clinical characteristic.

The classification model takes advantages of the benefits provided by the training method: it is more stable as the features selected are independent from the image domain source, i.e. the measurement and/or digital acquisition pipelines. It is also more accurate since the organ classier has be trained with more images since it has been possible to collect them from different measurement and/or digital acquisition pipelines.

Thanks to these provisions, the classification model allows identifying morphological abnormalities that are currently unknown to anatomopathological classifications.

According to another aspect, the invention relates to a computerized system adapted to classify an image by implementing a classification model trained with the training method according to the invention,
the classification model being adapted to determine a classification output according to one or more of a set of classes, when being implemented on an input image representing an input measurement of an input biological characteristic of an organ or an input biological sample of a tissue of an organ,
the one or more set of classes being relative to a physiological state or a biological or a clinical relevant characteristic of tissues of an organ;
the classification output being relative to the physiological state or the biological or the clinical relevant characteristic
the classification model comprising:
   - a feature extractor adapted to, when implemented on a given image, select a reduced set of features from this given image;
   - a outcome classifier adapted to, when implemented on a given reduced set of features selected from a given image, categorize the given reduced set of features into one or more of a set of classes defining the classification output of the outcome classifier and the classification model;
the one or more set of classes being relative to the physiological state or the biological or the clinical relevant characteristic
   - a domain source classifier adapted to, when implemented on a given reduced set of features selected from an image representing a measurement of a biological characteristic of a patient or a biological sample of a patient, categorize the given reduced set of features into one or more of a set of classes defining the output of the domain source classifier,
the one or more set of classes being relative to an image domain source of this given image;
the system comprising:
   i - a feature computerized module adapted to implement the feature extractor on the input image to select a reduced set of features from the input image,
   ii - a classification computerized module adapted to implement the label classifier on the reduced set of features obtained from the input image to determine a label output relative to the relevant biological or clinical characteristic.

According to another aspect, the invention relates to a computer program for training a classification model adapted to classify an image representing an input measurement of an input biological characteristic of a patient or an input biological sample of a patient wherein the computer program is adapted, when run on a processor, to cause the processor to implement the computerized training method of a classification model according to the invention.

According to another aspect, the invention relates to a computer program for classify an image representing an input measurement of an input biological characteristic of a patient or an input biological sample of a patient wherein the computer program is adapted, when run on a processor, to cause the processor to implement the computerized method for classifying an image according to the invention.

### BRIEF DESCRIPTION OF THE DRAWINGS

Embodiments of the invention will be described below with reference to the drawings, described briefly below:
[Fig. 1] represents a general overview of a deep learning processing applied to breast and pancreas tissue as an example to illustrate the definition of the domain source of an image and the image semantic of an image.
[Fig. 2] represents the mathematical relations between the parameters of the feature extractor and the domain classifier defining an adversarial training.
[Fig. 3] represents a graph of results illustrating the interest of the training method .

In the drawings, identical references designate identical or similar objects.

### DETAILED DESCRIPTION OF THE INVENTION

### General overview

### Machine learning and classified model

### Event to be classified, characteristics of this event and acquisition pipelines of those characteristics

In statistics and computer area, classification is the problem of identifying which of a set of categories or classes an observation (or observations) or an event belongs to. The observation or the event is relative to a system.

It is understood that, here, the term "system" always refers to a physical system, i.e. a functional unit whose parts are interconnected and exchange matter, energy or information. In particular, in the medicine, biological or anatomical area, a system is a group of organs or tissues with the same structure, participating in the same function, constituting a biological entity. As an example, a system can be a biological tissue of an organ, a subset of cells or a cell.

To allow the event to be classified, its characteristics have to be acquired.

These characteristics are physical characteristics of the system and, thus, the real value, and *in fine* the variations over time, of the time variables can be measured, captured and/or acquired by sensors, measurement systems, capture systems and/or acquisition systems adapted to detect and measure these values over time.

Applied to a biological tissue of an organ, a subset of cells or a cell, it is possible that the characteristic of the observation or event be a measurement or a sample a biological tissue of an organ, a subset of cells or a cell acquired by an acquisition system according to an acquisition method and/or biologically treated by a biological treatment system according to a biological treatment method. Those measurement system and method and/or biological treatment system and method define the measurement pipeline of the measurement or the sample.

In addition, this measurement sample a biological tissue of an organ, a subset of cells or a cell can then be itself captured by image/video acquisition system leading to image or video of the observation or by measurement acquisition system leading to measured data of the characteristic of the observation.

Such image can be considered a medical image as it refers to a measurement or a sample a biological tissue of an organ, a subset of cells or a cell.

For example, the acquisition method and/or the biological treatment method of the input sample can comprise:
- an acquisition or sampling process;
- a fixation process to preserve the structure and the hardening of the tissue;
- a inclusion process to obtain a block inside which the sample is included;
- a cut process to obtain slides of the block; and/or
- a coloration process.

The acquired image a technical data as it is acquired by an image acquisition system according to an image acquisition method and/or digitally processed by digital image processing system according to a digital image processing method. The acquisition system and method and/or the digital processing system and method define the digital acquisition pipeline of the image.

For example, the image acquisition method and/or the digital image processing method of the input image comprises four sequential parts: image acquisition (scanning), storage, editing, and display of images. The image acquisition method and/or the digital image processing method of the input image depends on the parameters of four main components: light source, slide stage, objective lenses, and a high-resolution camera for image capture.

### Classification model

Applied to technical data, and especially to image - for example medical image - classification model is its broadest meaning is an algorithm, i.e. a set of steps, by which an entry data can be classified into a class, also called a label, defined according to a classification system or classification architecture or classification structure.

Classification and clustering are examples of the more general problem of pattern recognition, which is the assignment of some sort of output value to a given input value. The input value derived from the measurement acquired or from the image of those measurement as described above.

To ensure this assignment of some sort of output value to a given input value derived from data, classification model are build or designed and implemented on the input value representing the input data of the classification model.

From a very general point of view, it is possible to divide the classification model into two categories: the rules-based models and the machine learning models.

A classification model can be a rules-based model where the different features or characteristic according to which the classification is made, i.e. the different classes are defined, are known and used to build the classification model.

A rules-based model can be very complex but as the rules are defined by a developer for conceiving the model, the output of model is fully interpretable by its developer. A rules-based model is human being approach and allows an automatization and a complexification of what a human mind can think.

A classification model can also be a machine learning model where the different features or characteristic according to which the classification will be made, i.e. the different classes will be defined, are unknown or not completely known and the training and/or the implementing of classification model allows to define them.

As a contrary, a machine learning model - here a classification machine learning model - does not reproduce, even in a complex way, the human mind approach. As the model is defined by itself at least in a little part (see further with the four broad categories) during the training, the output of the model cannot be fully interpretable by its developer.

The invention relates to the technical field of the classification models being machine learning models.

Machine learning area and an example of machine learning classification model will now be detailed.

Machine learning (ML) is the study of computer algorithms that can improve automatically through experience and by the use of data. It is seen as a part of artificial intelligence. Machine learning algorithms build a model based on sample data, known as training data or training dataset, in order to make predictions or decisions or classification without being explicitly programmed to do so. Machine learning algorithms are used in a wide variety of applications, such as in medicine, email filtering, speech recognition, and computer vision, where it is difficult or unfeasible to develop conventional algorithms to perform the needed tasks.

The term "prediction" refers to the output of an algorithm after it has been trained on a historical dataset and applied to new data when forecasting the likelihood of a particular outcome. In some cases, it really does mean that you are predicting a future outcome; other times, though, the "prediction" has to do with a categorization of data (not a future data), where the term "classification" can also be used. In other words, the term "prediction" has to be understood in its broader meaning in the machine learning field. It can refer to classification output, categorization output or any output of a machine learning model.

A classification model is adapted to determine a classification output according to one or more of a set of classes, when being implemented on an input image, the one or more set of classes being relative to one or more label.

A label corresponds to a relevant characteristic according to which the entry data is classified, for example, "cancerous" for a image of a tissue, and the classes corresponds to a classification (determined or not) of the value of this relevant characteristic determined by the model, for example "0" or "1" if the output of model is a binary output with "0" meaning that the tissue is not cancerous and "1" meaning that the tissue is.

In the latter example, the classification is very simple: the image is classified into a binary output, i.e. with two classes relative to one label.

However, depending of the label, the classes can be numerous.

### Implementation data space and implementation image space

An implementation data space of a classification model defines data adapted to be used as input of the classification model.

When the classification model is implemented on image, the implementation data space is an implementation image space. It defines images adapted to be used as input of the classification model.

It is defined and bounded by an image input semantic limit.

For example, if the label is "cancerous", an image of a car is not in the implementation image space.

If the label is "cancerous" and is relative to a specific organ, then, the implementation image space refers to all the images of this organ adapted to be classified according to this label, for example into one of two classes corresponding to "non-cancerous" and "cancerous".

### Semantic and domain source of a model

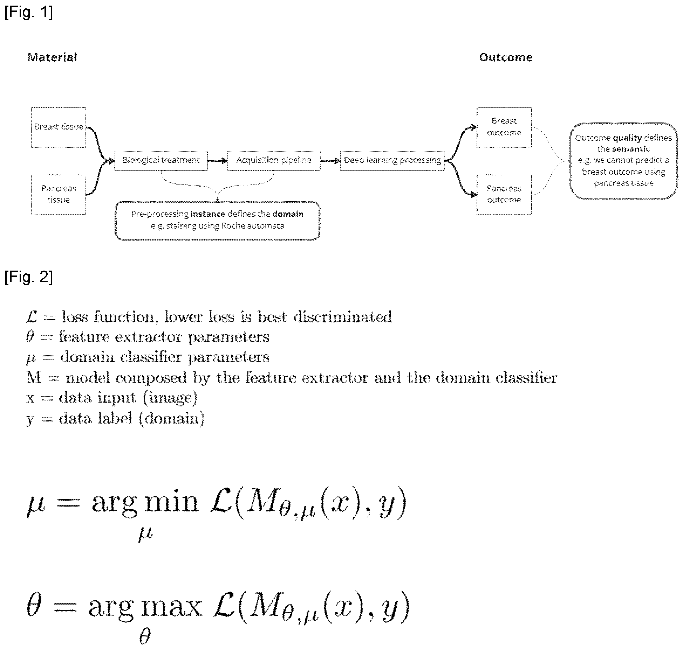

[Fig.1] illustrates what the notions of semantic and domain, or domain source, refer to when it comes to machine learning, or deep learning, models.

Here, as an example, a breast tissue and a pancreas tissue are used as input sample and lead to input image of them thanks to pre-processing instance or devices forming the measurement pipeline and the digital acquisition pipeline.

An image domain source of those input image is then defined by these devices : indeed, those pre-processing devices leave "traces" into the images used as input image for the deep learning model. Those "traces" can be seen as digital prints of the input image which reveals or betrays the digital acquisition pipeline of the input image but also the digital prints which reveals or betrays the measurement pipeline of the input measurement or the input sample. Thus, the image domain source of the input image is defined by its digital acquisition pipeline and the measurement pipeline.

The semantic of the model, which is equivalent to the image semantic of the input image, is defined by the outcome of the deep learning model.

In other words, the image semantic corresponds to both the definition of the organ (or the subset of cells as explained above) for which the outcome classifier is intended to be implemented and to the one or more set of classes relative to the physiological state or the biological or the clinical relevant characteristic of the organ into which the outcome classifier classify the image of the organ.

Here, a pancreas tissue image and a breast tissue image have not the same semantic since it is not possible to determine a physiological state or a biological or a clinical relevant characteristic of one by classifying an image of the other. Then, a outcome classifier relative to a physiological state or a biological or a clinical relevant characteristic of a breast cannot be trained with images of pancreas.

An example to best understand the differences between the two notions is to see the domain source as day and night for a car and bicycle which each defines a different semantic. However, a car still remains a car whether it is day or night. Same applies for a bicycle.

### Training of the models and overfitting = problem to be solved

Usually, machine learning models require a lot of data in order for them to perform well. Usually, when training a machine learning model, one needs to collect a large, representative sample of data from a training set. Data from the training set can be as varied as a corpus of text, a collection of images, and data, as defined above, collected from individual users of a service.

This data adapted to train the machine learning model belongs or is comprised in the data training space of the classification model. A "good" training for a classification model is achieved when the classification model is considered accurate enough on the data training space, i.e. when the classification model is implemented with data training and when, once trained, the classification model is considered accurate enough on a wider part of the implementation data space. This means, that the teaching of the classification model can be applied with reliability of data different from the training data. To ensure this aims, the best would be to be able to cover all the variety of data adapted to be used as input data for the classification during the training of the classification model, i.e. that the data training space covers all the implementation data space. In practice, this is not possible and, still, the training of the classification has to be "good" as defined above.

In some occasion, this is not the case. An overfitting of the classification model is one of such case where the training is not "good".

From a general point of view, in mathematical modeling, overfitting is the production of an analysis that corresponds too closely or exactly to a particular set of data, and may therefore fail to fit to additional data or predict future observations reliably". An overfitted model is a mathematical model that contains more parameters than can be justified by the data. The essence of overfitting is to have unknowingly extracted some of the residual variation (i.e., the noise) as if that variation represented underlying model structure.

For example, a model might be selected by maximizing its performance on some set of training data, and yet its suitability might be determined by its ability to perform well on unseen data; then over-fitting occurs when a model begins to "memorize" training data rather than "learning" to generalize from a trend.

Overfitting is especially likely in cases where training examples are rare, causing the learner to adjust to very specific random features of the training data that have no causal relation to the target function. In this process of overfitting, the performance on the training examples still increases while the performance on unseen data becomes worse.

Here, in the context of the invention, the classification model is designed to be implemented on a medical image, which is therefore the input image of the classification model. It means that the input data of the classification model is a medical image.

In addition, this medical image represents a measurement of an input biological characteristic of an organ or a biological sample of a tissue of an organ. This measurement is therefore the input measurement, and the corresponding biological characteristic is the input characteristic. Otherwise, the medical image can represent a biological sample of a tissue of an organ, and, in this case, this sample is the input biological sample.

Thus, the classification model has for input an input image representing an input measurement of an input biological characteristic of an organ or an input biological sample of a tissue of an organ. This is a first reason why such classification model is designed to be implemented on a medical image can suffer from overfitting after being trained.

Here, the data training space is an image training space and it refers to a collection of images adapted to train the classification model. As the classification model is designed to be implemented on an input medical image an image training space of the classification model comprises images representing a measurement of an input biological characteristic of an organ or a biological sample of a tissue of an organ. Those images are the "training examples" of the classification model and they are comprised, by definition, in the image training space.

Indeed, such "training examples" can be rare since clinical trials are likely to be the only occasion to collect some medical image representing a measurement of an input biological characteristic of an organ or a biological sample of a tissue of an organ. Thus, the image training space of the classification model cannot cover the entire variety of the medical image adapted to be used as input image for the classification model, i.e. the image training space is only a little part of the implementation image space.

As explained above, such medical images are acquired according to a measurement pipeline and a digital acquisition pipeline. Thus, the risk for such classification model is to extract some of the residual variation (i.e., the noise) generated by the measurement and the digital acquisition pipeline as if that variation represented underlying model structure.

Moreover, as a reminder, in statistics and computer area, an image domain source of an input image defines the digital prints of the input image which reveals or betrays the digital acquisition pipeline of the input image but also the digital prints which reveals or betrays the measurement pipeline of the input measurement or the input sample. Thus, the image domain source of the input image is defined by its digital acquisition pipeline and the measurement pipeline.

Images have different image domain source if their digital acquisition pipeline and/or their measurement pipeline are different.

Thus, an overfitting of the classification model in the context of the invention correspond to an extraction of features corresponding to the image domain source and not the underlying model structure of the training image.

As a reminder, if a classification model suffers from overfitting, the performance on the training examples can increase while the performance on unseen data becomes worse. Here, the risk for the classification model implemented on medical image is that the digital acquisition pipeline and/or the measurement pipeline of the training images used to train the model leads lead to incorrect classification determined by the classification model when implemented on unknown images.

From a more general point of view, the risk is that the classification determined by the classification model (the classifications outputs) to be incorrect on a major part of the implementation image space of the classification model because the classification model is overfitted so its performances are only accurate on the images of the implementation image space having similar image domain sources than the training images.

The training method according to the invention aims to avoid this risk.

### General proposition of the invention

### Architecture of the classification model to be trained

According to the invention, a classification model, to be trained according to the trained method of the invention, is adapted to determine a classification output according to one or more of a set of classes, when being implemented on an input image representing an input measurement of an input biological characteristic of an organ or an input biological sample of a tissue of an organ, the one or more set of classes being relative to a physiological state or a biological or a clinical relevant characteristic of tissues of an organ; the classification output being relative to the physiological state or the biological or the clinical relevant characteristic.

The term "organ" also refers to this subset of cells.

As the classification model is designed to classify the input image according to a physiological state or the biological or the clinical relevant characteristic of the organ, this organ can be considered the relevant organ.

This classification model comprises:
- a feature extractor adapted to, when implemented on a given image, select a reduced set of features from this given image;
- a outcome classifier adapted to, when implemented on a given reduced set of features selected from a given image, categorize the given reduced set of features into one or more of a set of classes defining the classification output of the outcome classifier and the classification model; the one or more set of classes being relative to the physiological state or the biological or the clinical relevant characteristic
- a domain source classifier adapted to, when implemented on a given reduced set of features selected from an image representing a measurement of a biological characteristic of a patient or a biological sample of a patient, categorize the given reduced set of features into one or more of a set of classes defining the output of the domain source classifier, the one or more set of classes being relative to an image domain source of this given image;

Any additional outcome classifier can be added to the classification model. Those additional outcome classifiers will then be trained in a similar way as the outcome classifier discussed hereafter.

This input image on which the classification is trained to be implemented on, being acquired by an image acquisition system according to an image acquisition method and/or digitally processed by digital image processing system according to a digital image processing method.

The image domain source for this given input representing an input measurement of an input biological characteristic of an organ or an input biological sample of a tissue of an organ representing a measurement of an input biological characteristic of a patient or an input biological sample of a patient, and acquired by an image acquisition system according to image acquisition method and/or digitally processed by digital image processing system according to a digital image processing method is defined by its acquisition system, its acquisition method, its biological treatment system, and/or its biological treatment method of the measurement or the sample (its measurement pipeline) and/or its image acquisition system, its image acquisition method, its digital image processing system, and/or its digital image processing method of the any given image (its digital acquisition pipeline).

In addition, if the input image is relative to an input measurement of an input biological characteristic of an organ, this image can comprise measured data chart.

In addition, if the input image is relative to an input sample of a tissue of an organ, the images of the organ training collection can be cytological images and/or histopathological images of the tissue, and/or the images of the domain training collection the domain training collection can be cytological images and/or histopathological images of tissues.

Cytological or histopathological images are images of a cytological or histopathological slide of a sample of a tissue of an organ.

### System

The training method is implemented by a computerized system. This system comprises various computerized modules which are each responsible for a step of the training method:
- a feature computerized module
- a classification computerized module
- an optimization computerized module

The feature computerized module is adapted to implement any feature extractor FE on an image.

A feature extractor FE is adapted to, when implemented on a given image, select a reduced set of features from this given image. Such feature extractor is a neural network and so, it has some parameters which determines which features are extracted to form the reduced set of features.

Without any domain adversarial training, the feature extractor selects features relative to both the organ and the digital acquisition and measurement pipelines. Among the features relative to the organ, such can be useful to classify the input image into the one or more set of classes being relative to a physiological state or a biological or a clinical relevant characteristic of tissues of the organ. The relevant features among the features extracted depends on the organ and/or the one or more classes: the training of feature extractor and the outcome classifier has for objective to, precisely, select the relevant features for the organ and/or the one or more classes.

The classification computerized module is adapted to implement any classifier C on an image. A classifier in machine learning is an algorithm that automatically orders or categorizes data into one or more of a set of "classes." A classifier in machine learning is an algorithm that automatically orders or categorizes data into one or more of a set of "classes."

Here, two classifiers can be implemented by the classification computerized module: an outcome classifier and a domain source classifier.

The outcome classifier OC is adapted to, when implemented on a given reduced set of features selected from a given image, categorize the given reduced set of features into one or more of a set of classes defining the classification output of the outcome classifier and the classification model; the one or more set of classes being relative to the physiological state or the biological or the clinical relevant characteristic of the relevant organ.

For example, the one or more set of classes can be relative to:
- a gene
- a variant in a sequence of nucleotides of a gene,
- a group of variants,
- a gene ontology,
- a gene pathways related to the gene, and/or
- a predictive and/or diagnostic morphological signature of a drug or a disease, and/or
- a clinical outcome.

The domain source classifier DC is adapted to, when implemented on a given reduced set of features selected from an image representing a measurement of a biological characteristic of a patient or a biological sample of a patient, categorize the given reduced set of features into one or more of a set of classes defining the output of the domain source classifier, the one or more set of classes being relative to an image domain source of this given image.

Both classifiers, as any neural network, have their own parameters, which determine each classification output.

The optimization computerized module is adapted to any given classifier by repeating the implementation of the feature extractor and the classifier and updating the same set of parameters of the feature extractor and a set of parameters of the domain source classifier at each iteration according to an output of the given classifier.

### Training method according to the invention

The general principle of the invention is to teach to the classification:
- to be able to classify the input image into the one or more set of classes being relative to a physiological state or a biological or a clinical relevant characteristic of tissues of an organ with the best accuracy possible, i.e. to train the outcome classifier OC to be the more accurate possible, and
- to not be able to recognize the image domain source of the input image, i.e. to train the domain source classifier DC to not be able to determine the domain image source of the input image.

Such training is called an adversarial training of the outcome classifier OC and the domain source classifier DC.

Thus, it would mean that the classification model does not classify the input image into the one or more set of classes according to information relative to the image domain source of the input image, i.e. according to the measurement pipeline and/or digital acquisition pipeline of the input image.

In order to train the outcome classifier and the domain source classifier, an organ training collection and domain training collection are provided. Those collections comprise medical images.

The organ training collection comprises a plurality of organ training images representing an input measurement of an input biological characteristic of an organ or an input biological sample of this organ and comprised in the outcome classifier training image space.

Moreover, those organ training images representing an input measurement of an input biological characteristic of the relevant organ, or an input biological sample of this organ are acquired according to a measurement pipeline and a digital acquisition pipeline defining their image domain source.

And, as a reminder, the relevant organ defines the image semantic of the classification model.

The domain training collection comprises a plurality of domain training images representing an input measurement of an input biological characteristic of an organ or an input biological sample of this organ and comprised in the domain classifier training image space.

Thus, a domain classifier training image space defines images representing an input measurement of an input biological characteristic of an organ or an input biological sample of this organ, and adapted to be used to train the domain classifier, the domain classifier training image space being bounded by a domain limit defined by the acquisition system, the acquisition method, the biological treatment system, and/or the biological treatment method of the measurement or the sample, and/or the image acquisition system, the image acquisition method, the digital image processing system, and/or the digital image processing method of the image used to acquired the input biological characteristic of the organ or the input biological sample of this organ and the image.

First, the organ or the plurality of organs are not necessarily the same as the relevant organ defining the organ training images comprised in the organ training collection.

In such case, the domain training images, and the organ training images have therefore not the same image semantic.

As a reminder, as any medical images, the images of the domain training collection and the images of the organ training collection have their own image domain sources, i.e. their own measurement and/or digital acquisition pipelines defined by its acquisition system, its acquisition method, its biological treatment system, and/or its biological treatment method of the measurement or the sample, and/or its image acquisition system, its image acquisition method, its digital image processing system, and/or its digital image processing method of the any given image.

Then, according to the invention, at least one image domain source of a group of images of the domain training collection is different from an image domain source of a group of images of the organ training collection, i.e. the measurement and/or digital acquisition pipelines of at least at least one image domain source of a group of images of the domain training collection is different from the one(s) an image domain source of a group of images of the organ training collection.

Moreover, images of both training collection can comprise measured data chart.

To ensure this, the same feature extractor is used to select a reduced set of features from the images used to train the outcome classifier and the domain source classifier, i.e. from the images of the organ training collection and the domain training collection.

Thus, doing so, the same parameters are used to select the reduced set of features from the images.

Then, the training method comprises an organ classifier training method process ; and a domain classifier training process run in an adversarial way with the updating of the parameters of the feature extractor.

According to the outcome classifier training process,
i - the feature computerized module implements the feature extractor on an image of the organ training collection to select a reduced set of features from this image,
ii - the classification computerized module implements the outcome classifier on the reduced set of features obtained from this image to determine a organ output relative to the physiological state or the biological or the clinical relevant characteristic
iii - the optimization computerized module optimizes the feature extractor and the outcome classifier and by repeating steps i and ii for each image of the organ training collection and updating a set of parameters of the feature extractor and a set of parameters of the outcome classifier at each iteration according to the accuracy of the output of the outcome classifier in order to increase the accuracy of the outcome classifier;

In other words, the reduced set of features is extracted by the feature extractor according to the parameters of the features which are updated (with the parameters of the outcome classifier) to increase the accuracy of the outcome classifier. In other word, by repeating the steps i and ii and updating the parameters, the features selected are linked by the outcome classifier to the one or more set of classes being relative to a physiological state or a biological or a clinical relevant characteristic of tissues of the organ with an increasing accuracy.

However, at this stage, there is no way to ensure that the features selected are only linked the one or more set of classes being relative to a physiological state or a biological or a clinical relevant characteristic of tissues of the organ since the measurement and digital acquisition pipelines of each image of the organ training collection can also influence the link between the features and the one or more set of classes being relative to a physiological state or a biological or a clinical relevant characteristic of tissues of the organ determined by the outcome classifiers (according to its parameters).

That is why, according to the domain classifier training process,
iv - the feature computerized module implements the feature extractor on an image of a plurality of domain source training images of a biological tissue to select a reduced set of features from this image,
v - the classification computerized module implements the domain source classifier on the reduced set of features selected from the image of the plurality of domain source training images to determine a domain source output relative to image domain source of this image;
vi - the optimization computerized module optimizes the domain source classifier by repeating steps iv and v for each image of the domain training collection and updating the same set of parameters of the feature extractor and a set of parameters of the domain source classifier at each iteration according to an output of the domain source classifier in order to prevent the domain source to be determined by the domain classifier.

In addition, the updating of the set of parameters of the feature extractor and the updating of the same set of parameters of the feature extractor during the domain classifier training is adversarial.

[Fig. 2] shows an example of the mathematical relations between the parameters of the feature extractor and the parameters of the domain classifier during the domain classifier training process.

Since, the same previous parameters of the feature extractor are updated (with the parameters of the domain source classifier) according to this training process in order to prevent the domain source to be determined by the domain classifier.

The updating of the parameters of the feature extractor leads to a selection of features for which the domain classifier is updated to not be able to link those features with their image domain source.

Then, since, as a reminder, at least one image domain source of a group of images of the domain training collection is different from an image domain source of a group of images of the organ training collection, i.e. the measurement and/or digital acquisition pipelines of at least at least one image domain source of a group of images of the domain training collection is different from the one(s) an image domain source of a group of images of the organ training collection, it means, the features selected cannot be linked with the measurement and/or digital acquisition pipelines of the images used to train the domain source classifier (from the domain training collection).

Then, it means than the features selected by the feature extractor to be linked with the one or more set of classes being relative to a physiological state or a biological or a clinical relevant characteristic of tissues of the organ determined by the outcome classifiers (according to its parameters) are not linked to the with the measurement and/or digital acquisition pipelines of the images used to train the domain source classifier the outcome classifier (from the organ training collection).

This leads to an increasing of the stability of the outcome classifier since it can be accurate on an image of any relevant organ acquired with different measurement and/or digital acquisition pipelines (i.e. with another domain source) since the updating of the parameters of the feature extractor during the domain classifier training have led to a domain source classifier not able to determine the image domain source of the images of the domain training collection.

If the classification model comprised more than one outcome classifier, the training of the one or more additional outcome classifiers allows the selection, by the feature extractor, of features relative to the organ and not the image domain source. Even if, such features relative to the organ can be not relevant for one of the outcome classifiers, the training according to the method leads to the selection of feature only relative to the organ and not the image domain source by the feature extractor. This increases the stability of the classification model.

The domain adversarial training previously presented can be implemented with more than two image domain sources represented in the domain training collection. Any number n of domain sources can be represented. However, the domain classifier is then modified to allows a stable domain adversarial training with n domain sources. Indeed, a problem is that a domain adversarial training is unstable, and with only one domain classifier to classify more than two domain sources, it would be even more. Indeed, it is difficult to determine the state of indistinguishability.

That is why, in this case, the domain source classifier comprises a determined number of specific domain source classifiers. The determined number of specific domain source classifier corresponding to the determined number of image domain sources of the images of the organ training collection and/or the domain training collection.

Those specific domain source classifiers are adapted to, when implemented on a given reduced set of features selected from an image representing an input measurement of an input biological characteristic of an organ or an input biological sample of this organ, categorize the given reduced set of features into one of two set of classes defining the output of this domain source classifier, the two set of classes being relative to two specific image domain sources of the plurality of image domain sources of the images of the organ training collection and/or the domain training collection.

Thus, the specific domain source classifier are adapted to classify the images of the domain training collection into one of two images domain sources represented in the domain training collection.

In other words, the adversarial training with n image domain sources is divided into n specific domain classifier with a binary output (e.g. domain 1 vs. domain 2, domain 2 vs. domain 3, etc). The classification model still has one main task head, the outcome classifier, but now comprises several adversarial domain heads, the specific domain classifiers.

Then, the domain classifier training process comprises, for each specific domain classifier:
v - the domain source computerized module implements this specific domain source classifier on the reduced set of features selected from the image of the plurality of domain source training images tissue to determine a domain source output relative to one of the two specific image domain sources of this specific domain classifier:
vi - the optimization computerized module optimizes the domain source classifier by repeating steps v and vi for each image of the domain training collection and updating the same set of parameters of the feature extractor and a set of parameters of a specific domain source classifier at each iteration according to the output of this specific domain source classifier to prevent the domain source to be determined by this specific domain classifier.

This allows to improve the stability of the classification model since, as for the standard domain adversarial training, the features selected by the feature extractor are independent from all the image domain sources represented in the domain training collection. And, as there are more image domain sources represented in the domain training collection, the features are independent with more measurement and digital acquisition pipelines. Thus, once trained, the classification model can be implemented on a wider part of its implementation image space and still be accurate.

In addition, the ability to realize a domain adversarial training with more than two image domain sources, makes the collecting images for the domain training collection easier.

For each batch comprising images relative to two different domain sources from the domain training collection, the outcome classifier training and the specific domain classifier trainings can be alternated according to one of the following process:

According to one embodiment, the set of parameters of the feature extractor and the set of parameters of the outcome classifier are updated after the set of parameters of all the specific domain classifiers have been updated according to the output of each specific domain classifier.

Or, according to alternative embodiment, the set of parameters of the feature extractor and the set of parameters of the outcome classifier are updated each time after the set of parameters of one of the specific domain classifiers have been updated according to the output of the one specific domain classifier.

In addition, it is possible than at least one group of images of the domain training collection is outside of the outcome classifier training image space, i.e. at least one group of images of the domain training collection is related to an image semantic different from the image semantic defined by the organ.

In other word, it is possible that the images of the domain training collection do not refers to the relevant organ for which the outcome classifier is trained to classify the input image into the one or more set of classes being relative to a physiological state or a biological or a clinical relevant characteristic of tissues of an organ with the best accuracy possible.

This at least one group of images outside of the outcome classifier training image space are there adapted to train the outcome classifier.

Their image semantic is different from the image semantic of the images of the organ training collection.

For example, if the relevant organ is a breast, and for example the outcome classifier is trained to classify an input image of breast into the one or more set of classes being relative to a physiological state or a biological or a clinical relevant characteristic of tissues of a breast (cancerous or not for example), it is possible to use images of colon, pancreas or lung.

The only condition is that the images used to train the domain classifier with a different image semantic, i.e. referring to another organ than the relevant organ, be in the domain training image space: indeed, to be adapted to train the domain classifier, the images referring to another organ have to share the type of measurement and digital acquisition pipelines of the images referring to the relevant organ used in the domain training collection.

Thus, more image domain sources can be used in the domain training collection and, as described above, it allows to make the features selected by the feature extractor FE independent from more measurement and digital acquisition pipelines.

This can be extended to any number of image semantics: it is possible that groups of images of the domain training collection are related to a plurality of different and distinct image semantics.

This benefit is not trivial and has an important influence of the classification model. Indeed, the more image can be used to train the outcome classifier classification model, the more the outcome classifier will be accurate.

Here, since the features selected by the feature extractor FE are independent from more measurement and digital acquisition pipelines, images of the relevant organ adapted to train the outcome classifier with different image domain sources can be used. Then, a larger quantity of images can be used and then the outcome classifier is more accurate but also more stable.

To summarize, the training method according to the invention allows to train the model relative to its main task (here, the outcome classifier) with more image sets which leads to a classification model more accurate. Here, the organ training collection can comprise more images since different measurement and digital acquisition pipelines can be used.

The training method allows a better transfer or application of the classification model to a different source domain. In others word, the training method enlarge the implementation space on which the model is stable.

### Benefits for the trained classification model

The training method according to the invention allows several benefits for a classification model trained with this method.

First, the classification model is more stable. That is to say that, with a larger quantity of input image relative to the relevant organ determined during its training process, the classification model can deliver output with an accuracy equivalent, comparable or close to the accuracy reached during the training process with the images of the organ training collection.

In other word, the classification model cannot suffer from overfitting thanks to the training method.

Thus, any measurement or digital acquisition pipeline can be used to collect image to be then used as input image of the classification model with no risk to influence the result - the output - of the classification model.

Moreover, the classification is more accurate. Indeed, a larger quantity of input image relative to the relevant organ have been able to be used to train the outcome classifier.

Then, from a more general point of view, the classification model trained according to training method of the invention allows identifying morphological abnormalities that are currently unknown to anatomopathological classifications.

### Examples

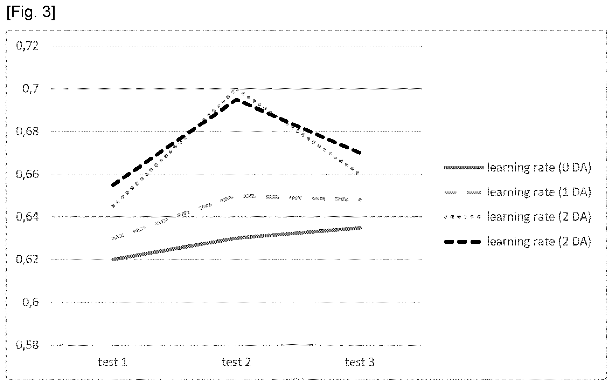

Hereafter, a specific embodiment of the classification training method is discussed and illustrated at [Fig. 3].

[Fig.3] illustrates the learning rate, e.g. the performance of a model trained with the method according to the invention, for three collection of images (tests 1 to 3) coming from different hospital centers (and so having different image domain sources).

The outcome classifier is designed to classify input image of uterus into one of the two following classes: healthy uterus and cancerous uterus.

Of course, the model has been trained with the method according to the invention. The domain classifier has been trained with images of colon healthy tissue and colon cancerous tissue. Thus, the domain training collection comprises images with a different image semantic than the input image of the outcome classifier (and the outcome classifier training collection used to train the outcome classifier).

The main point of this graph is that, for each test, the performances (learning rate) of the model increase with the number of specific domain training classifiers.

### Others

While exemplary embodiment of the invention has been described with reference to two main embodiments, it will be understood by those skilled in the art that various changes, omissions and/or additions may be made, and equivalents may be substituted for elements thereof without departing from the spirit and scope of the invention. In addition, many modifications may be made to adapt a particular situation or material to the teachings of the invention without departing from the scope thereof. Therefore, it is intended that the invention is not limited to the particular embodiment disclosed as the best mode contemplated for carrying out this invention, but that the invention will include all embodiments falling within the scope of the appended claims. Moreover, unless specifically stated any use of the terms first, second, etc. do not denote any order or importance, but rather the terms first, second, etc. are used to distinguish one element from another.

## Claims

1. A computerized training method of a classification model,
the classification model being adapted to determine a classification output according to one or more of a set of classes, when being implemented on an input image representing an input measurement of an input biological characteristic of an organ or an input biological sample of a tissue of an organ,
the one or more set of classes being relative to a physiological state or a biological or a clinical relevant characteristic of tissues of an organ;
the classification output being relative to the physiological state or the biological or the clinical relevant characteristic of the organ;
this classification output relative to this organ defining the semantic of the classification model,
an implementation image space of the classification model, defining images adapted to be used as input of the classification model,
this input measurement or this input sample being acquired by a measurement system according to a measurement method and/or biologically treated by a biological treatment system according to a biological treatment method,
the input image, on which the classification is trained to be implemented on, being acquired by an image acquisition system according to an image acquisition method and/or digitally processed by digital image processing system according to a digital image processing method,
an image domain source for any given image representing an input measurement of an input biological characteristic of an organ or an input biological sample of a tissue of an organ, and acquired by an image acquisition system according to image acquisition method and/or digitally processed by digital image processing system according to a digital image processing method
being defined by
its acquisition system, its acquisition method, its biological treatment system, and/or its biological treatment method of the measurement or the sample, and/or
its image acquisition system, its image acquisition method, its digital image processing system, and/or its digital image processing method of the any given image;
the classification model comprising:
- a feature extractor adapted to, when implemented on a given image, select a reduced set of features from this given image;
- a outcome classifier adapted to, when implemented on a given reduced set of features selected from a given image, categorize the given reduced set of features into one or more of a set of classes defining the classification output of the outcome classifier and the classification model;
the one or more set of classes being relative to the physiological state or the biological or the clinical relevant characteristic of the organ,
- a domain source classifier adapted to, when implemented on a given reduced set of features selected from an image representing a measurement of a biological characteristic of a patient or a biological sample of a patient, categorize the given reduced set of features into one or more of a set of classes defining the output of the domain source classifier,
the one or more set of classes being relative to an image domain source of this given image;
- a outcome classifier training image space defining images
representing an input measurement of an input biological characteristic of an organ or an input biological sample of a tissue of an organ
and
adapted to be used to train the outcome classifier,
- a domain classifier training image space, defining images
representing an input measurement of an input biological characteristic of an organ or an input biological sample of this organ, and
adapted to be used to train the domain classifier,
the domain classifier training image space being bounded by a domain limit defined by the acquisition system, the acquisition method, the biological treatment system, and/or the biological treatment method of the measurement or the sample, and/or the image acquisition system, the image acquisition method, the digital image processing system, and/or the digital image processing method of the image;
the training method comprising:
a) a outcome classifier training process comprising:
given a organ training collection comprising a plurality of organ training images representing an input measurement of an input biological characteristic of an organ or an input biological sample of this organ and comprised in the outcome classifier training image space,
i - a feature computerized module implements the feature extractor on an image of the organ training collection to select a reduced set of features from this image,
ii - a classification computerized module implements the outcome classifier on the reduced set of features obtained from this image to determine a organ output relative to the physiological state or the biological or the clinical relevant characteristic
iii - an optimization computerized module optimizes the feature extractor and the outcome classifier and by
repeating steps i and ii for each image of the organ training collection and
updating a set of parameters of the feature extractor and a set of parameters of the outcome classifier at each iteration according to the accuracy of the output of the outcome classifier in order to increase the accuracy of the outcome classifier;
b) a domain classifier training process comprising:
given a domain training collection comprising a plurality of domain training images representing an input measurement of an input biological characteristic of an organ or an input biological sample of this organ and comprised in the domain classifier training image space,
at least two image domain sources of a group of images of the domain training collection being different from an image domain source of a group of images of the organ training collection,
iv - the feature computerized module implements the feature extractor on an image of a plurality of domain source training images of a biological tissue to select a reduced set of features from this image,
v - a classification computerized module implements the domain source classifier on the reduced set of features selected from the image of the plurality of domain source training images to determine a domain source output relative to image domain source of this image;
vi - an optimization computerized module optimizes the domain source classifier by repeating steps iv and v for each image of the domain training collection and updating the same set of parameters of the feature extractor and a set of parameters of the domain source classifier at each iteration according to an output of the domain source classifier in order to prevent the domain source to be determined by the domain classifier;
wherein the updating of the set of parameters of the feature extractor and the updating of the set of parameters of the domain source classifier, during the domain classifier training, is adversarial.

2. A computerized training method of a classification model according to the preceding claim,
wherein a determined number of image domain sources of the images of the organ training collection and/or the domain training collection is superior to two,
wherein the domain source classifier comprises a determined number of specific domain source classifiers,
the determined number of specific domain source classifier corresponding to the determined number of image domain sources of the images of the organ training collection and/or the domain training collection,
wherein each specific domain classifier is adapted to, when implemented on a given reduced set of features selected from an image representing an input measurement of an input biological characteristic of an organ or an input biological sample of this organ, categorize the given reduced set of features into one of two set of classes defining the output of this domain source classifier,
the two set of classes being relative to two specific image domain sources of the plurality of image domain sources of the images of the organ training collection and/or the domain training collection,
wherein the a) domain classifier training process comprises:
v - the domain source computerized module implements a specific domain source classifier on the reduced set of features selected from the image of the plurality of domain source training images tissue to determine a domain source output relative to one of the two specific image domain sources of this specific domain classifier:
vi - the optimization computerized module optimizes the domain source classifier by repeating steps v and vi for each image of the domain training collection and updating the same set of parameters of the feature extractor and a set of parameters of a specific domain source classifier at each iteration according to the output of this specific domain source classifier in order to prevent the domain source to be determined by this specific domain classifier.

3. A computerized training method of a classification model according to the preceding claim,
wherein, for each batch comprising images relative to two different domain sources from the domain training collection, the outcome classifier training and the specific domain classifier trainings are alternated according to one of the following process:
- the set of parameters of the feature extractor and the set of parameters of the outcome classifier are updated after the set of parameters of all the specific domain classifiers have been updated according to the output of each specific domain classifier, or
- the set of parameters of the feature extractor and the set of parameters of the outcome classifier are updated each time after the set of parameters of one of the specific domain classifiers have been updated according to the output of the one specific domain classifier.

4. A computerized training method of a classification model according to any of the preceding claims,
wherein at least one group of images of the domain training collection is outside of the outcome classifier training image space., i.e. at least one group of images of the domain training collection is related to an image semantic different from the image semantic defined by the organ.

5. A computerized training method of a classification model according to the preceding claim,
wherein groups of images of the domain training collection are related to a plurality of different and distinct image semantics.

6. A computerized training method of a classification model according to any of the preceding claim wherein
the one or more set of classes is relative to:
- a gene
- a variant in a sequence of nucleotides of a gene,
- a group of variants,
- a gene ontology,
- a gene pathways related to the gene, and/or
- a predictive and/or diagnostic morphological signature of a drug or a disease, and/or
- a clinical outcome.

7. A computerized training method of a classification model according to any of the preceding claim wherein
the input image is relative to an input measurement of an input biological characteristic of an organ, and
the images of the organ training collection and/or the domain training collection comprises measured data chart.

8. A computerized training method of a classification model according to any of the preceding claim wherein
the input image is relative to an input sample of a tissue of an organ,
the images of the organ training collection are cytological images and/or histopathological images of the tissue, and/or
the images of the domain training collection the domain training collection are cytological images and/or histopathological images of tissues.

9. A computerized training method of a classification model according to any of the preceding claim wherein
the input image is relative to an input sample of a tissue of an organ, and
the acquisition method and/or the biological treatment method of the input sample comprises:
- an acquisition or sampling process;
- a fixation process to preserve the structure and the hardening of the tissue;
- a inclusion process to obtain a block inside which the sample is included;
- a cut process to obtain slides of the block; and/or
- a coloration process.

10. A computerized training method of a classification model according to any of the preceding claim wherein
the image acquisition method and/or the digital image processing method of the input image comprises one of the following:
- Image acquisition,
- Storage
- Editing and/or
- Display of the image.

11. A computerized method for classifying an image by implementing a classification
model trained with the training method according to any of the preceding claims,
the classification model being adapted to determine a classification output according to one or more of a set of classes, when being implemented on an input image representing an input measurement of an input biological characteristic of an organ or an input biological sample of a tissue of an organ,
the one or more set of classes being relative to a physiological state or a biological or a clinical relevant characteristic of tissues of an organ;
the classification output being relative to the physiological state or the biological or the clinical relevant characteristic
the classification model comprising:
- a feature extractor adapted to, when implemented on a given image, select a reduced set of features from this given image;
- a outcome classifier adapted to, when implemented on a given reduced set of features selected from a given image, categorize the given reduced set of features into one or more of a set of classes defining the classification output of the outcome classifier and the classification model;
the one or more set of classes being relative to the physiological state or the biological or the clinical relevant characteristic
- a domain source classifier adapted to, when implemented on a given reduced set of features selected from an image representing a measurement of a biological characteristic of a patient or a biological sample of a patient, categorize the given reduced set of features into one or more of a set of classes defining the output of the domain source classifier,
the one or more set of classes being relative to an image domain source of this given image;
the implementation of the classification model comprising the following steps:
i - a feature computerized module implements the feature extractor on the input image to select a reduced set of features from the input image,
ii - a classification computerized module implements the label classifier on the reduced set of features obtained from the input image to determine a label output relative to the relevant biological or clinical characteristic.

12. A computerized system adapted to classify an image by implementing a classification model trained with the training method according to any of the preceding claims 1 to 10,
the classification model being adapted to determine a classification output according to one or more of a set of classes, when being implemented on an input image representing an input measurement of an input biological characteristic of an organ or an input biological sample of a tissue of an organ,
the one or more set of classes being relative to a physiological state or a biological or a clinical relevant characteristic of tissues of an organ;
the classification output being relative to the physiological state or the biological or the clinical relevant characteristic
the classification model comprising:
- a feature extractor adapted to, when implemented on a given image, select a reduced set of features from this given image;
- a outcome classifier adapted to, when implemented on a given reduced set of features selected from a given image, categorize the given reduced set of features into one or more of a set of classes defining the classification output of the outcome classifier and the classification model;
the one or more set of classes being relative to the physiological state or the biological or the clinical relevant characteristic
- a domain source classifier adapted to, when implemented on a given reduced set of features selected from an image representing a measurement of a biological characteristic of a patient or a biological sample of a patient, categorize the given reduced set of features into one or more of a set of classes defining the output of the domain source classifier,
the one or more set of classes being relative to an image domain source of this given image;
the system comprising:
i - a feature computerized module adapted to implement the feature extractor on the input image to select a reduced set of features from the input image,
ii - a classification computerized module adapted to implement the label classifier on the reduced set of features obtained from the input image to determine a label output relative to the relevant biological or clinical characteristic.

13. A computer program for training a classification model adapted to classify an image
representing an input measurement of an input biological characteristic of a patient or an input biological sample of a patient wherein the computer program is adapted, when run on a processor, to cause the processor to implement the computerized training method of a classification model of any of the claim 1 to 10.

14. A computer program for classify an image representing an input measurement of an input biological characteristic of a patient or an input biological sample of a patient wherein the computer program is adapted, when run on a processor, to cause the processor to implement the computerized method for classifying an image of the claim 11.
